# EUROPÄISCHE PATENTSCHRIFT

(11) **EP 1 440 307 B1**
(45) Veröffentlichungstag und Bekanntmachung des Hinweises auf die Patenterteilung: **30.11.2011**
(21) Anmeldenummer: 02777315.9
(22) Anmeldetag: 17.10.2002
(51) Int. Cl.: G01N 23/18

(54) **Vorrichtung zur Röntgenprüfung von Rädern**
Device for X-ray testing of wheels
Dispositif de contrôle radiographique de roues

(30) Priorität: 30.10.2001 DE 10153379
(43) Veröffentlichungstag der Anmeldung: 28.07.2004
(73) Patentinhaber: Fraunhofer-Gesellschaft zur Förderung der angewandten Forschung e.V., 80686 München (DE)
(72) Erfinder: WENZEL, Thomas, 91083 Baiersdorf (DE); Stone, Ashley, Brampton, Ontario L6T 4Z7 (CA); HANKE, Randolf, 90617 Puschendorf (DE)
(74) Vertreter: Schenk, Markus
(86) Internationale Anmeldenummer: PCT/EP2002/011644
(87) Internationale Veröffentlichungsnummer: WO 2003/038419

(56) Entgegenhaltungen:
- FR-A- 901 717
- US-A- 4 809 308
- US-A- 4 949 366
- PATENT ABSTRACTS OF JAPAN vol. 009, no. 253 (P-395), 11. Oktober 1985 (1985-10-11) -& JP 60 104240 A (TOSHIBA KK), 8. Juni 1985 (1985-06-08)

## Beschreibung

Die vorliegende Erfindung bezieht sich auf die Röntgenprüfung von Rädern, wie z.B. Leichtmetallrädern.

Räder, wie z.B. Leichtmetallräder, stellen Sicherheitsteile dar, die von den Herstellern oder Dienstleistungsunternehmen zu 100 Prozent bzw. in vollem Umfang auf eventuelle Fehlstellen hin untersucht werden. Dies geschieht in voll- oder halbautomatischen Röntgenprüfsystemen unter Verwendung von Röntgenstrahlen. Das Rad wird hierzu zwischen einem Röntgenstrahler und einem Röntgendetektor positioniert und mit Hilfe eines Manipulationssystems in unterschiedliche Positionen bzw. Lageausrichtungen gebracht, um das gesamte Volumen des Prüflings während eines Prüfprozesses abdecken zu können.

Die besondere Problematik bei der Handhabung des Rades besteht darin, einerseits eine sichere und relativ genaue Positionierung des zu untersuchenden Rades bzw. des Radrohlings während des Prüfprozesses vorzunehmen, und andererseits eine hohe Positioniergeschwindigkeit zu erreichen, um die Prüfzeit, d.h. die für den Prüfprozeß erforderliche Zeitdauer, möglichst gering zu halten.

Derzeit werden für die Röntgenprüfung von Rädern Systeme eingesetzt, die im wesentlichen -auf zwei verschiedenen Techniken basieren. Systeme, die auf der Greifertechnik basieren, umfassen ein Fördersystem, wie z.B. ein Rollenband, einen Manipulator bzw. eine Handhabungseinrichtung mit einem Greifsystem und eine Röntgenvorrichtung bestehend aus einer Röntgenröhre und einem Röntgendetektor. Das Rad wird durch das Fördersystem durch die Prüfanlage geschleust. Die Röntgenröhre und der Röntgendetektor befinden sich über der durch das Fördersystem definierten Transportebene bzw. dem Transportniveau. Die Strahlrichtung zwischen Röntgenröhre und Röntgendetektor verläuft parallel zur Förder- bzw. Transportrichtung. Der Manipulator realisiert vier Achsen, bezüglich derer das Rad während einer Prüfung in seiner Lage verändert werden kann, d.h. eine Y-Achse, die senkrecht zur Transportrichtung parallel zur Transportebene verläuft, zum lateralen Verschieben des Rades, eine Z-Achse bzw. Vertikalachse, die senkrecht auf der Transportebene steht, zum Anheben des Rades von und Ablegen des Rades auf dem Fördersystem, eine Schwenkachse p, die entlang der Y-Achse verläuft, für eine Drehung des Rades um die Y-Achse und eine Rotationsachse ω des Rades für eine Drehung des Rades bzw. Prüflings um seine Rotationsachse. Die Rotations- und Drehachse werden durch das Greifsystem realisiert, das an dem Manipulator montiert ist, um entlang der Y- und Z-Achse verschiebbar zu sein. Der Greifer besteht je nach Auslegung aus vier Kegelrädern, die das Rad am Horn des Felgenbetts des zu prüfenden Rades auf dem Transportniveau bzw. in der Transportebene greifen und durch Anheben und Schwenken in den Strahlengang zwischen der Röntgenröhre und dem Röntgendetektor bringen. Durch Verschieben des Greifssystems entlang der Transaktionsachsen Y und Z sowie durch Drehung um die Schwenkachse ρ werden verschiedene Prüfpositionen bzw. Stellungen realisiert, in denen das Rad mit der Rotationsachse ω gedreht wird. Je nach Betriebsart, d.h. einem voll- oder halbautomatischen Betrieb, werden die einzelnen Blickwinkel bzw. der Winkel des Strahlengangs bezüglich des Rades, durch kontinuierliches oder, im Rahmen eines Stopp-und-Geh-Modus, inkrementweises Anfahren der verschiedenen Rotationswinkel ω eingestellt. Nach der Prüfung wird das Rad wieder auf dem Förder- bzw. Transportsystem abgelegt und anschließend abgefördert. Dazu muß der Greifer in vertikaler Richtung verfahren werden, um den Förderweg freizugeben.

Eine zweite Art von Systemen basiert auf einer Kettenfördertechnik. Bei diesen Systemen sind das Fördersystem und das Greifsystem in einem Kettensystem vereinigt. Zwei umlaufende Ketten, die das Rad seitlich am unteren Horn des Rades fassen, übernehmen zum einen den Transport des Rades durch die Prüfanlage, zum anderen realisieren sie die X-Achse des Manipulators, die der Z-Achse der im vorhergehenden beschriebenen Systemen entspricht. Da die Strahlachse vertikal, d.h. senkrecht zur Transportebene, und damit senkrecht zur Transportrichtung verläuft, kann der Kettentransport außerdem die Funktion der Drehachse ω übernehmen. In diesem Fall werden die Ketten in gegenläufige bzw. entgegengesetzte Richtungen bewegt. Um ein Schwenkachse ρ zu realisieren, sind der Röntgenstrahler und der Röntgendetektor einander gegenüberliegend auf einem C-Gestell montiert, das eine Drehung des durch den Röntgenstrahler und Detektor definierten Strahlenganges um die Transportrichtungsachse ermöglicht. Um eine laterale Verschiebung entlang der Y-Achse zu realisieren, wird entweder das C-Gestell entlang der Transportebene senkrecht zur Transportrichtung verfahren, während der Kettenförderer nicht bewegt wird, oder umgekehrt.

Ein Nachteil der auf der Greiftechnik basierenden Systeme besteht darin, daß zum Anheben und Ablegen des zu prüfenden Rades von bzw. auf dem Transportsystem ein erheblicher mechanischer sowie zeitlicher Aufwand erforderlich ist.

Ein Nachteil der auf der Kettenfördertechnik basierender Systeme besteht darin, daß bei diesen Systemen die Gefahr eines Auswanderns des Rades aus den zwei umlaufenden Ketten des Kettensystems besteht. Dieses Auswandern wird beispielsweise durch Gießgrate oder nachlassende Kettenspannungen ausgelöst und kann dazu führen, daß das zu prüfende Rad den Prüfbereich bzw. die Prüfanlage verläßt. Folglich ist eine stabile Prüfung bei diesen Systemen nicht sichergestellt. Zusätzlich nehmen diese Systeme aufgrund der Notwendigkeit des Drehens des Strahlenganges um die Transportrichtung mittels des C-Gestells sehr viel Platz ein, und der Schwenkbereich ist je nach Auslegung des C-Gestelles auf weniger als 360° beschränkt.

Die US 4,949,366 bezieht sich auf die Röntgenprüfung von KFZ-Reifen. Die zu prüfenden Reifen werden auf drehbaren Rollen eines Förderers zu Schwenkfördereinheiten befördert, die die zu prüfenden Reifen um eine Achse aus ihrer Transportebene, wie sie durch den Förderer definiert ist, herauskippen. In dieser senkrechten Prüfstellung werden sie durch eine in horizontaler Richtung verschiebbare Röntgenröhre vom Zentrum aus durchleuchtet, wobei die Strahlung außerhalb des Reifens durch Dioden aufgefangen wird. Eine Drehung des Rades um seine Achse während der Durchleuchtung ist ebenfalls vorgesehen. Nach der Prüfung werden die Reifen wieder zurück auf die Transportebene geschwenkt und durch einen Abförderabschnitt 1 abtransportiert.

Die US 4,809,308 beschreibt ein Verfahren und eine Vorrichtung zum Durchführen einer automatisierten Schaltungsplatinen-Lötstellenqualitätsüberprüfung. Eine zu überprüfende Schaltungsplatine wird auf einer Translationsvorrichtung positioniert, um durch eine Tür in dem Inneren eines Gehäuses unter eine Röntgenquelle verfahren zu werden, die dann die Platine in Richtung einer Kamera durchstrahlt. In der Translationsvorrichtung ist ein X-Y-Positioniertisch realisiert, um die Platine während der Durchstrahlung quer zur Durchstrahlungsrichtung bewegen zu können. Der Tisch ist auf einem Rotationstisch angebracht, der eine 360-Grad-Drehung des Tisches ermöglicht. Ferner ist die Möglichkeit des Kippens der Anordnung aus Rotations-, Positionierungstisch und Translationsvorrichtung aus der Horizontalen in eine schräge Ebene vorgesehen sowie die Möglichkeit, die Anordnung in der Z-Richtung zu verschieben. Nach erfolgter Prüfung, wird die Platine wieder aus der Öffnung ausgegeben.

Die JP 60-104240 beschreibt eine Reifenröntgenprüfvorrichtung. Die zu prüfenden Reifen werden auf einem Förderweg zu einer Reifenaufnahmebasis transportiert, dort von einer Schiebe- und Absetzvorrichtung ergriffen, angehoben, zu einem Prüfort verfahren und dort wieder zu einer Prüfposition herabgelassen, an die eine Röntgenquelle, ein Röntgendetektor und eine Spule so plaziert sind, daß die Röntgenquelle kein Hindernis für den zu untersuchenden Reifen bildet. Die Röntgenquelle kann somit stets in ihrer Stellung verbleiben, was die Genauigkeit erhöht. Nach der Prüfung wird das Rad wieder angehoben, zu einem Abförderer verfahren, auf demselben abgesetzt und von demselben dann weitertransportiert.

Die FR 901.717 bezieht sich auf eine Durchleuchtungsanlage für Großgußteile. Bei dieser Anlage ist es möglich, die mit einem Schirm korrespondierende Leuchtröhre in der Höhe, im Abstand zum Schirm zu verändern, und um eine senkrechte Achse, d.h. in Höhenrichtungen, schwenken. Das zu durchleuchtende Gußteil wird auf einem Traggestell zwischen Röntgenröhre und Leuchtschirm gefahren. Das Traggestell sieht verschiedene Möglichkeiten der Ausrichtung der Lage des Gußteiles im Strahlengang vor. Das gesamte Gestell ist auf einem Wagen angeordnet, und somit in einer ersten Richtung verschiebbar. Ein weiterer Wagen ist auf dem ersten in einer hierzu senkrechten Richtung verfahrbar angeordnet. Das Traggestell ist über eine Schnecke und ein Schneckenrad höhenverstellbar sowie um die Achse des Stempels drehbar um die Höhenachse gelagert. Das Gußteil ist wiederum so zwischen zwei Bolzen eingespannt, daß es sich um eine horizontale Achse drehen läßt.

Die Aufgabe der vorliegenden Erfindung besteht darin, eine Vorrichtung und ein Verfahren zur Röntgenprüfung eines Rades zu schaffen, so daß die Röntgenprüfung bzw. ein Prüfvorgang unaufwendiger wird.

Diese Aufgabe wird durch eine Vorrichtung gemäß Anspruch 1 und ein Verfahren gemäß Anspruch 9 gelöst.

Der vorliegenden Erfindung liegt die Erkenntnis zugrunde, daß die Vorteile der beiden vorhergehenden erwähnten Systeme, nämlich die Durchführung der Prüfung in der Transportebene bei den Systemen des Kettenfördertyps einerseits und die sicherere Handhabung bei den Systemen des Greiftyps andererseits, miteinander in einem System vereint werden können, wenn der durch einen Röntgenstrahler und einen Röntgendetektor einer Röntgenstrahleinrichtung definierte Strahlengang senkrecht zur Transportrichtung verläuft und das Schwenken des Rades um eine Schwenkachse durchgeführt wird, die im wesentlichen in der Transportebene liegt.

Im Vergleich zu den Systemen des Kettenfördertyps wird durch die Verlagerung der Schwenkachse in die Transportebene weniger Platz für die Röntgenprüfungsvorrichtung benötigt und zudem ein Schwenkbereich von 360 ° ermöglicht. Im Vergleich zu den Systemen der Greiftechnik ergeben sich ernorme Zeiteinsparungen in Hinblick auf die Prüfzeiten, da das Rad nicht aus der Transportebene herausgehoben werden muß.

Eine erfindungsgemäße Vorrichtung zur Röntgenprüfung eines Rades umfaßt eine Einrichtung zum Zufördern des Rades in einer Transportrichtung in einer Transportebene zu einem Prüfort bzw. einer Prüfstelle und zum Abfördern des Rades von dem Prüfort in der Transportrichtung in der Transportebene. Ferner ist eine Einrichtung zum Handhaben des Rades vorgesehen. Diese Einrichtung umfaßt eine Einrichtung zum Greifen des Rades an dem Prüfort, zum Drehen des Rades um eine Rotationsachse des Rades und zum Schwenken des Rades um eine Schwenkachse, die im wesentlichen in der Transportebene verläuft. Eine Röntgenstrahleinrichtung mit einem Röntgenstrahler und einem Röntgendetektor, die einen Strahlengang definieren, der senkrecht zur Schwenkachse verläuft, ist derart angepaßt, daß der Strahlengang lateral entlang einer Ebene senkrecht zum Strahlengang verschiebbar ist.

Gemäß einem Ausführungsbeispiel der vorliegenden Erfindung verläuft die Schwenkachse senkrecht zur Transportrichtung und der Strahlengang verläuft senkrecht zur Transportebene und ist lateral entlang der Transportebene verschiebbar, die durch die Fördereinrichtung definiert wird.

Gemäß einem weiteren Ausführungsbeispiel ist ferner eine Einrichtung vorgesehen, die die Beförderungseinrichtung in zwei Stellungen bewegt, nämlich eine erste Stellung, in der die Beförderungseinrichtung angeordnet ist, um das Rad zu transportieren, bzw. in der die Beförderungseinrichtung das Rad berührt, und eine zweite Stellung, in der das Schwenken der Rades durch die Schwenkeinrichtung der Handhabungseinrichtung ermöglicht wird, bzw. die Beförderungseinrichtung für die Schwenkbewegung aus dem Weg ist.

Als Beförderungseinrichtung kann eine Endlosfördereinrichtung, wie z.B. eine Transportkette, vorgesehen sein, die an einem freien Ende eines schwenkbare Armes befestigt ist. In dem Fall, daß die Endlosfördereinrichtung aus zwei parallelen Transportketten besteht, die an freien Enden zweier Schwenkbarer Arme befestigt sind, können die schwenkbaren Arme beispielsweise um Kippachsen drehbar gelagert sein, die parallel zur Transportrichtung und voneinander beabstandet sind.

Als Greifeinrichtung können zwei Greifer vorgesehen sein, die um die Schwenkachse schwenkbar gelagert sind und sich in einer Richtung der Schwenkachse gegenüberliegen. Jeder Greifer weist zwei Kegelräder auf, die vorgesehen sind, um mit einem Felgenhorn des Rades Eingriff zu nehmen. Hierdurch wird eine 4-Punkt-Aufnahme realisiert, die ein stabileres Greifen des Rades sicherstellt als dies bei den Systemen des Kettenfördertyps der Fall ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Draufsicht einer Anlage, die eine Röntgenprüfrichtung gemäß einem Ausführungsbeispiel der vorliegenden Erfindung aufweist, wobei die Röntgenprüfeinrichtung aus Übersichtlichkeitsgründen nicht gezeigt ist, wobei sich die Fördereinrichtung in einer Förderstellung befindet;
- Fig. 2: eine Seitenansicht der Anlage von Fig. 1 in einer Blickrichtung, die gegen die Transportrichtung zeigt, wobei mit gestrichelten Linien eine Förderstellung und mit durchgezogenen Linien eine Prüfvorgangstellung der Fördereinrichtung gezeigt ist; und
- Fig. 3: eine Seitenansicht der Anlage von Fig. 1 in einer Blickrichtung senkrecht zur Transportrichtung, wobei mit gestrichelten Linien eine Förderstellung und mit durchgezogenen Linien eine Prüfvorgangstellung der Fördereinrichtung gezeigt ist.

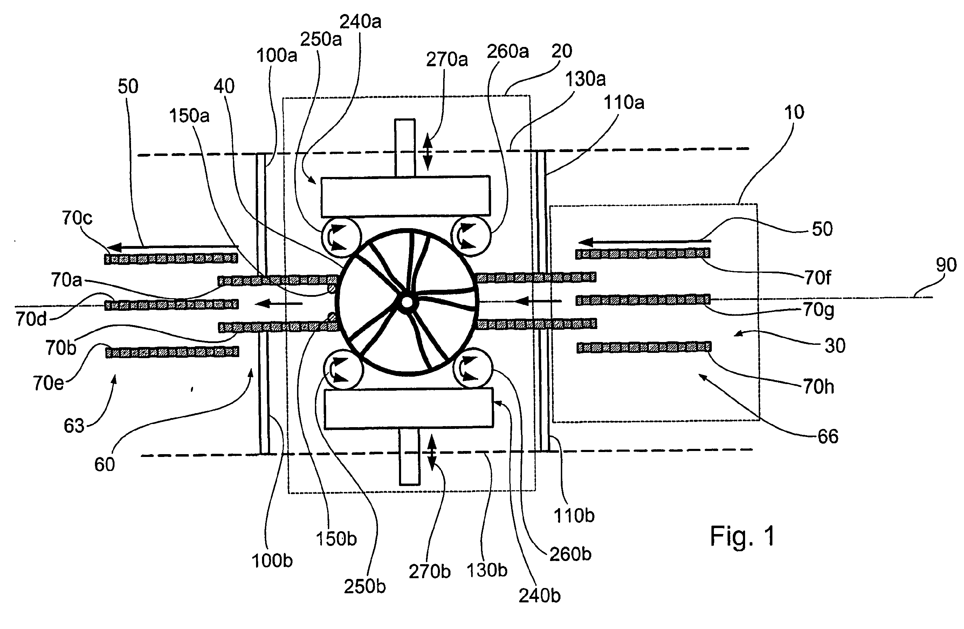

Bevor Bezug nehmend auf die Figuren 1 bis 3 ein Ausführungsbeispiel der vorliegenden Erfindung beschrieben wird, wird darauf hingewiesen, daß in den Figuren 1 bis 3 gleiche Elemente in den Figuren mit den selben Bezugszeichen versehen sind, und daß eine wiederholte Beschreibung der Elemente weggelassen wird, um Wiederholungen zu vermeiden.

Zunächst wird anhand der Figuren 1 bis 3 der Aufbau einer Anlage beschrieben, die eine Röntgenprüfrichtung gemäß einem Ausführungsbeispiel der vorliegenden Erfindung aufweist. Wie es am besten in Fig. 1 zu sehen ist, umfaßt die Anlage eine Identifikationsstation 10 sowie eine Prüfstation 20. Die Anlage umfaßt ferner eine Fördereinrichtung bzw. ein Transport bzw. Fördersystem, die bzw. das allgemein mit 30 angezeigt ist, und Räder 40, wie z.B. Leichtmetallfelgen, in einer Transportrichtung 50 von Station zu Station befördert bzw. zu- und abfördert. Neben den gezeigten Stationen 10 und 20 kann die Anlage ferner weitere Stationen aufweisen, wie z.B. Stationen zum Bearbeiten der Räder, wie z.B. Frässtationen, Lackierstationen, usw. Ferner kann die Anlage eine zentrale Verarbeitungseinheit zum Steuern der gesamten Anlage umfassen.

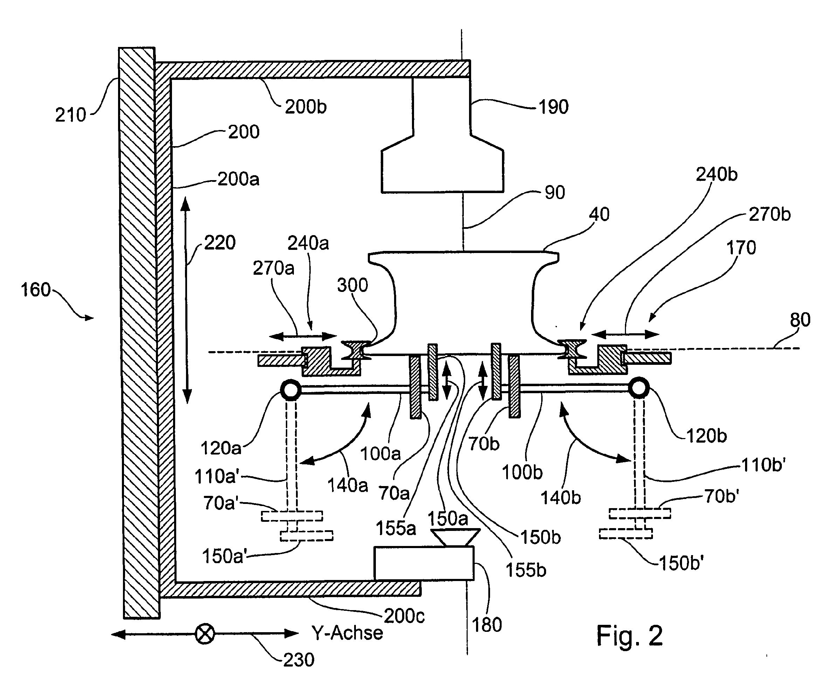

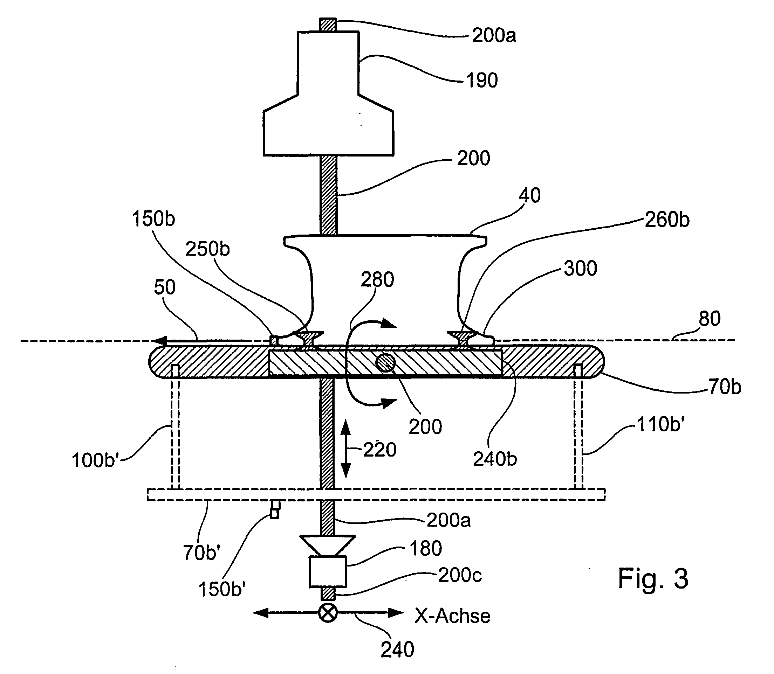

Die Fördereinrichtung 30 besteht aus einer Aufeinanderfolge von unabhängig antreibbaren Kettentransportsystemen 60, 63 und 66. Jedes Kettentransportsystem 60, 63 und 66 umfaßt mehrere in Transportrichtung 50 parallel ausgerichtete und gleichlaufende Transportketten 70. Insbesondere umfaßt das Kettentransportsystem 60 Transportketten 70a und 70b, das Kettentransportsystem 63 Transportketten 70c, 70d und 70e und das Kettentransportsystem 66 Transportketten 70f, 70g und 70h. Die oberen Seiten bzw. Transportflächen der Transportketten 70 befinden sich auf einer Höhe und definieren eine Transportebene 80, wie sie durch gepunktete Linien in den Figuren 2 und 3 dargestellt ist, auf bzw. entlang der die zu prüfenden Räder 40 getragen bzw. transportiert werden.

Insbesondere erstrecken sich die Transportketten 70a und 70b des Kettentransportsystems 60 entlang der Transportrichtung 50 über die gesamte Länge der Prüfstation 20 hinweg, um das Rad 40 von dem Kettentransportsystem 66 zu übernehmen, das Rad 40 zu einem Prüfort an der Prüfstation 20 zuzuführen und das Rad 40 von dem Prüfort abzufördern und an das Kettentransportsystem 63 weiterzugeben. Die Transportketten 70a und 70b sind achsensymmetrisch zu einer Mittelebene 90 der Fördereinrichtung 30 angeordnet. Die Fördereinrichtung 70a ist über Schwenkarme 100a und 110a mit einem Kippgelenk 120a verbunden, um um eine Kippachse 130a drehbar gelagert zu sein, die von der Mittelebene 90 weiter beabstandet ist als die Transportkette 70a und parallel zur Transportrichtung 50 und in ungefähr der Transportebene 80 verläuft. Auf entsprechende Weise ist die Transportkette 70b über Schwenkarme 100b und 110b an einem Kippgelenk 120b drehbar gelagert, um um eine Kippachse 130b drehbar gelagert zu sein, die sich achsensymmetrisch zur Kippachse 130a bezüglich der Mittelebene 90 befindet.

Wie es in Fig. 2 und 3 zu sehen ist, sind die Transportketten 70a und 70b bzw. die Schwenkarme 100a und 100b in zwei Stellungen schwenkbar, wie es durch Pfeile 140a und 140b (Fig. 2) angezeigt ist. In einer ersten Stellung, die durch durchgezogene Linien dargestellt ist, erstrecken sich die Schwenkarme 100a und 100b waagerecht, wodurch eine Beförderung des Rades 40 durch die Transportketten 70a und 70b ermöglicht wird. In der zweiten Stellung, die durch gestrichelte Linien dargestellt ist, und in Bezug auf welche die entsprechenden Elemente durch die selben Bezugszeichen wie in der ersten Stellung jedoch um ein Apostroph erweitert bezeichnet sind, erstrecken sich die Schwenkarme 100a und 100b hinab bzw. sind herabgeklappt.

An festen Positionen der Transportketten 70a und 70b sind Stoppbolzen 150a und 150b vorgesehen, welche einen Prüfort entlang der Transportrichtung 50 definieren, an welchem sich das Rad 40 in den Figuren 1 bis 3 befindet, und die zusammen mit den Transportketten 70a und 70b über die Schwenkarme 100a bzw. 100b schwenkbar sind. Die Stoppbolzen 150a und 150b sind, wie es durch Doppelpfeile 155a und 155b gezeigt ist, senkrecht zur Transportebene - oder genauer senkrecht zur Transportrichtung und senkrecht zur Erstrekkungsrichtung der Arme 100a und 100b - in zwei Stellungen verschiebbar, eine Stoppstellung, bei der das Rad 40 während der Beförderung durch das Kettentransportsystem 60 aufgehalten wird, und eine Gehstellung, bei der das Rad 40 auf dem Kettentransportsystem 60 ungehindert passieren kann.

Die Prüfstation 20 folgt in Transportrichtung 50 auf die Identifikationsstation 10. Die Prüfstation 20 umfaßt eine Röntgenstrahleinrichtung 160, die in Fig. 1 aus Übersichtlichkeitsgründen nicht gezeigt ist, sowie eine Radhandhabungseinrichtung 170 bzw. einen Manipulator oder ein Manipulationssystem 170. Die Röntgenstrahleinrichtung 160 umfaßt eine Röntgenröhre 180 als Röntgenstrahler, einen Bildverstärker 190 als Röntgendetektor, ein C-förmiges Gestell 200 und einen Translationsantrieb 210. Die Röntgenröhre 180 und der Bildverstärker 190 sind an jeweils einem anderen Ende des C-förmigen Gestells 200 angebracht, um sich einander über die Transportebene 80 gegenüberzuliegen, und um einen Strahlengang senkrecht zur Transportebene zu definieren, der sich zwischen denselben erstreckt.

Das C-förmige Gestellt 200 besteht aus einem Mittelabschnitt 200a und zwei Endabschnitten 200b und 200c, die parallel zueinanderverlaufen. Die Endabschnitte 200b und 200c sind mit jeweils einem ihrer Enden mit einem unterschiedlichen Ende des Mittelabschnitts 200a verbunden, während an dem anderen Ende derselben der Bildverstärker 190 bzw. die Röntgenröhre 180 befestigt ist. Die Endabschnitte 200b und 200c erstrecken sich senkrecht zur Transportrichtung 50 und parallel zur Transportebene 80. Der Mittelabschnitt 200a verläuft senkrecht zur Transportebene 80. Der Mittelabschnitt 200a des C-Gestells 200 ist mit dem Kettenantrieb 210 verbunden, um senkrecht zur Transportebene 80 bzw. entlang einer Vergrößerungsachse verschiebbar zu sein, wie es durch einen Doppelpfeil 220 angezeigt wird. Ferner ist das C-Gestell 200 und dadurch auch der zwischen dem Bildverstärker 190 und der Röntgenröhre 180 definierte Strahlengang entlang einer Richtung senkrecht zur Transportrichtung und parallel zur Transportebene 80 (Y-Achse), wie es durch einen Doppelpfeil 230 angezeigt wird, und entlang der Transportrichtung 40 (X-Achse), wie es durch einen Pfeil 240 angezeigt wird, verschiebbar. Die Verschiebung kann beispielsweise mittels eines Translationsantriebs durchgeführt werden, der eine Translationsbewegung der Kettenfördereinrichtung 210 entlang Transportebene 80 bewirkt.

Der Manipulator 170 besteht aus zwei Greifern 240a und 240b, die sich über die Mittelebene 90 gegenüberliegen. Jeder Greifer 240a und 240b umfaßt zwei Kegelräder 250a und 260a bzw. 250b und 260b. Die Kegelräder 250a und 260a bzw. 250b und 260b jedes Greifers 240a und 240b sind derart drehbar an den Greifern 240a bzw. 240b angebracht, daß sie von der Mittelebene 90 gleichweit beabstandet und entlang der Transportrichtung 50 um einen geeigneten Abstand voneinander entfernt sind. Der geeignete Abstand entlang der Transportrichtung 50 hängt von den Durchmessern der zu verarbeitenden Räder 40 ab, und liegt vorzugsweise bei 2^{-½} mal dem Durchmessers der Räder.

Wie es durch Pfeile 270a und 270b gezeigt ist, sind die Greifer 240a und 240b entlang einer Richtung senkrecht zur Transportrichtung 50 und parallel zur Transportebene 80 verschiebbar angeordnet, um in eine Greifstellung zum Greifen des Rads 40 und eine Freigabestellung zum Ermöglichen des Zu- und Abtransports des Rads 40 verfahrbar zu sein, wobei in den Fig. 1 bis 3 lediglich die Greifstellung gezeigt ist. Ferner sind die Greifer 240a und 240b, wie es durch einen Pfeil 280 in Fig. 3 gezeigt ist, um Achsen drehbar gelagert, die auf einer gemeinsamen Schwenkachse 290 liegen. Die gemeinsame Schwenkachse 290 verläuft senkrecht zur Transportrichtung 50 und im wesentlichen in der Transportebene 80. Die Schwenk- und Verschiebemöglichkeiten 270a, 270b bzw. 280 der Greifer 240a und 240b werden beispielsweise durch Teleskopzylinder realisiert, deren Rotationsachsen auf der gemeinsamen Schwenkachse 290 liegen und deren Zylindersegmente gegeneinander drehbar sind.

Die Greifer 240a und 240b sind auf einer derartigen Höhe angeordnet, daß die Kegelräder mit einem Felgenhorn 300 auf der Seite des Rades 40 Eingriff nehmen können, die der Transportebene 80 zugewandt ist.

In den Figuren 1-3 nicht gezeigt, sind Antriebe zum lateralen Verschieben der Greifer 240a und 240b, Antriebe zum Antreiben der Kegelräder eines der beiden Greifer, ein Antrieb zum Drehen eines der beiden Greifer um die Schwenkachse 290 sowie Antriebe zum Verfahren der Stoppbolzen 150a und 150b. Ferner sind Antriebe vorgesehen, um das Herabklappen der Transportketten 70a und 70b zu ermöglichen.

Nachdem im vorhergehenden der Aufbau der Anlage von Fig. 1-3 gezeigt worden ist, wird im folgenden die Funktionsweise derselben im Hinblick auf die Röntgenprüfung beschrieben. Die Steuerung des Prüfvorganges kann beispielsweise durch eine zentrale Verarbeitungseinrichtung (nicht gezeigt) gesteuert werden, die mit verschiedenen Sensoren entlang der Anlage und mit den Antrieben, die im vorhergehenden erwähnt wurden, verbunden ist, um Steuer- und Meßsignale zu empfangen bzw. zu senden.

Bevor das Rad 40 den Prüfort erreicht, an dem sich das Rad in den Figuren 1 bis 3 befindet, durchläuft das Rad 40 angetrieben durch das Kettentransportsystem 66 die Identifikationsstation 10, die beispielsweise einen Strichcodeleser oder einen Sender/Empfänger aufweist, um einen Strichcode oder einen Identifikationscode, der in einem Transponder an dem Rad 40 gespeichert ist, zu erfassen, und hierdurch das zu prüfende Rad 40 bzw. den Radrohling zu identifizieren. Das Kettentransportsystem 66 übergibt das Rad 40 an das Kettentransportsystem 60, das sich zunächst in der ersten Stellung (durchgezogene Linie) befindet und das Rad der Prüfstation 20 zuführt.

Die Stoppbolzen 150a und 150b befinden sich in der angehobenen Stoppstellung, um die Förderung des Rades 40 entlang der Transportrichtung 50 zu stoppen, sobald das Rad 40 den Prüfort erreicht hat. Nach Erreichen des Prüfortes werden die Transportketten 70a und 70b angehalten und die Stoppbolzen 150a und 150b in die Gehstellung abgesenkt. Daraufhin werden die Greifer 240a und 240b von außen seitlich an das sich am Prüfort befindliche Rad 40 herangefahren, um die Kegelräder 250 und 260 mit dem Felgenhorn 300 in Eingriff zu bringen. Die Greifer 240a und 240b werden seitlich mit definiertem Druck an das Rad 40 angedrückt und halten das Rad 40 am Prüfort. Ein Auswandern des Prüflings 40 ist hierdurch auch bei der späteren Hantierung bzw. Manipulation ausgeschlossen. Nachdem das Rad 40 durch die Greifer 240a und 240b in Eingriff genommen worden ist, werden die Transportketten 70a und 70b in ihre herabgeklappte Stellung (gestrichelte Linie) geschwenkt, um zum einen den Strahlengang zwischen dem Bildverstärker 190 und der Röntgenröhre 180 freizugeben und zum anderen ein Schwenken des Rades 40 durch die Greifer 240a und 240b zu ermöglichen, wie es im folgenden beschrieben werden wird.

Nachdem die Transportketten 70a und 70b herabgeklappt sind, beginnt der eigentliche Röntgenprüfvorgang. Hierbei steht zur Manipulation der Lage des Prüflings 40 relativ zu dem zwischen dem Bildverstärker 190 und der Röntgenröhre 180 definierten Strahlgang zum einen eine Drehbewegung des Rades 40 um seine Rotationsachse zur Verfügung. Hierzu werden durch einen motorischen Antrieb die Kegelräder eines Greifers der Greifer 240a und 240b angetrieben. Ferner besteht eine Schwenkmöglichkeit zum Schwenken des Prüflings 40 und damit auch seiner Rotationsachse um die Schwenkachse 290. Hierzu wird ein motorischer Antrieb eines der beiden Greifer 240a und 240b angesteuert, um einen derselben um die Schwenkachse 290 zu schwenken. Der jeweils nicht angetriebene Greifer wird durch die Kraftübertragung über das Rad 40 von dem angetriebenen Greifer mitgeschwenkt. Ferner steht zur Änderung der Lagebeziehung zwischen Strahlengang und Prüfling 40 ein Verschieben des C-Gestells 200 entlang der Transportebene 80 zur Verfügung. Das Anfahren der verschiedenen Prüfpositionen bzw. Prüfstellungen kann entweder inkrementweise im Rahmen eines Stop-And-Go- bzw. Stopp-Und-Geh-Modus, oder kontinuierlich erfolgen. Ferner ist es durch Verschieben des C-Gestells 200 entlang der Vergrößerungsachse 200 möglich, einen Vergrößerungsmaßstab des in dem Bildverstärkers 190 erfaßten Bildes zu verändern, das sich aus den von der Röntgenröhre 180 ausgestrahlten und durch das Rad 40 hindurchgetretenen Strahlen ergibt.

Nachdem der Prüfvorgang beendet ist, werden die Schwenkarme 100 und 110 bzw. die Transportketten 70a und 70b wieder in ihre erste Stellung gebracht, um eine Be- bzw. Abförderung des Rades 40 durch dieselben zu ermöglichen. Die Stoppbolzen 150a und 150b befinden sich in der unteren Position, um beim Abtransport des Rades 40 nicht im Wege zu sein. Danach werden die Greifer 240a und 240b wieder nach außen zurückgezogen, um ebenfalls einen Abtransport des Rades 40 zu ermöglichen, und um die Kegelräder 250 und 260 mit dem Felgenhorn 300 des geprüften Rades 40 außer Eingriff zu bringen. Hierauf fördert das Kettentransportsystem 60 das bereits geprüfte Rad 40 von dem Prüfort ab und gibt dasselbe an das Kettentransportsystem 63 weiter, daß dasselbe beispielsweise an eine Stapelstation weiterleitet.

Das im vorhergehenden beschriebe Ausführungsbeispiel ermöglicht folglich eine schnellere und sicherere Manipulation von Rohlingen von Leichtmetallgußrädern als dies bei den in der Beschreibungseinleitung beschriebenen Systemen des Greiftyps bzw. des Kettenfördertyps möglich ist. Durch die Verlagerung der Schwenkfunktion in die Förderebene wird ein geringerer Platzbedarf erreicht. Ferner ist ein größerer Schwenkbereich möglich. Durch die 4-Punkt-Aufnahme des Rades ist ein stabiles Greifen des Rades sichergestellt. Insgesamt ergibt sich eine Kombination einer verbesserten Greifertechnik mit einer vorteilhaften Prüfung in der Transportebene. Die Prüfposition bzw. der Prüfort befindet sich in der Transportebene. Ein Auswandern des Rades, wie es bei den Kettenfördertypsystemen der Fall ist, wird wirksam verhindert. Durch die Verlagerung der Schwenkachse in die Transportebene wird gegenüber den Kettenfördersystemen weniger Platz benötigt und gleichzeitig ein größerer Schwenkbereich bereitgestellt. Über den Greifsystemen der in der Beschreibungseinleitung beschriebenen Art ergeben sich Zeiteinsparungen, da das Rad nicht aus der Transportebene herausgehoben werden muß.

Nachdem im vorhergehenden ein Ausführungsbeispiel der vorliegenden Erfindung beschreiben worden ist, wird darauf hingewiesen, daß die vorliegende Erfindung nicht nur auf Leichtmetallfelgen anwendbar ist, sondern ferner auf jegliche Art von Rädern bzw. Reifen. Zudem kann die Einrichtung zum Zufördern des Rades zu dem Prüfort und zum Abfördern des Rades von dem Prüfort anders realisiert sein. Anstatt Transportketten können beispielsweise auch Transportbänder oder andere Endlosfördersysteme verwendet werden. Grundsätzlich wäre auch eine Berührungslose Führung nach Art einer Magnetschwebevorrichtung möglich, in welchem Fall die Schwenkarme als Einrichtung zum Bewegen der Fördereinrichtung in und aus dem Strahlengang fehlen könnten. Ferner ist es möglich, eine andere Bewegungseinrichtung zur Bewegung der Fördereinrichtung vorzusehen als einen Schwenkmechanismus, um das Transportsystem aus dem Strahlengang bzw. aus dem Schwenkbereich des Rades zu bringen. Alternativ könnte die Fördereinrichtung beispielsweise aus lateral verschiebbaren Trägereinheiten bestehen, die nach Erreichen des Prüfortes in der Transportebene aus dem Strahlengang seitlich parallel zur Transportebene bewegt werden.

Zudem müssen die Kegelräder nicht an zwei getrennten Greifern vorgesehen sein. Alternativ könnten die Räder an einem einzigen Greifer drehbar gelagert sein, der senkrecht zur Transportebene verschiebbar ist. Die Kegelräder könnten das Felgenhorn schnappmäßig in Eingriff nehmen. Die Anzahl der Felgenrädern ist zudem nicht auf vier beschränkt sondern könnte auch drei oder mehr als vier betragen. Ferner könnte die Drehbewegung um die Rotationsachse des Rades durch Antriebe aller Kegelräder bewegt werden, oder Schwenkbewegung durch aktives Schwenken beider Greifer. Ferner könnte das zu prüfende Rad auch an einem anderen Ort in Eingriff genommen werden als an dem unteren Felgenhorn, und es könnten hierzu andere Räder als Kegelräder vorgesehen sein.

In Bezug auf die Schwenkung des Rades wird darauf hingewiesen, daß unter dem Ausdruck "im wesentlichen in der Transportebene" in Bezug auf die Schwenkachse jegliche Lage der Schwenkachse parallel zur Transportebene gemeint ist, die von der Nähe der Oberseite bis zu der Nähe der Unterseite des Rades reicht, d.h. von dem einen Felgenhorn bis zu dem anderen Felgenhorn in der Seitenansicht. Ferner wird darauf hingewiesen, daß eine Verstellbarkeit des Strahlengangs in lediglich einer Richtung parallel zur Transportebene in manchen Anwendungsfällen ausreichend sein kann.

Ferner wird darauf hingewiesen, daß die Schwenkachse nicht senkrecht zur Transportrichtung verlaufen muß. Zusätzlich ist es nicht unbedingt erforderlich, daß der Strahlengang senkrecht zur Transportebene verläuft und verschiebbar ist. Ebenfalls möglich wäre eine Anordnung bei der Strahlengang stets senkrecht zur Schwenkachse verläuft und lateral entlang einer Ebene senkrecht zum Strahlengang verschiebbar ist.

## Patentansprüche

1. Vorrichtung zur Röntgenprüfung eines Rades (40), mit
einer Einrichtung (60, 70a, 70b) zum Zufördern des Rades (40) in einer Transportrichtung (50) in einer Transportebene (80) zu einem sich in der Transportebene befindlichen Prüfort und zum Abfördern des Rades (40) von dem Prüfort in der Transportrichtung (50) in der Transportebene (80), derart, dass das Rad beim Zufördern zu dem Prüfort sowie beim Abfördern von dem Prüfort in der Transportebene verbleibt;
einer Einrichtung (170) zum Handhaben des Rades (40) am Prüfort, wobei die Einrichtung zum Handhaben folgende Merkmale aufweist:
eine Einrichtung (240a, 240b, 250a, 260a, 250b, 260b) zum Greifen des Rades (40) an dem Prüfort;
eine Einrichtung (250a, 260a, 250b, 260b) zum Drehen des Rades (40) um eine Rotationsachse des Rades (40); und
eine Einrichtung zum Schwenken des Rades (40) um eine Schwenkachse, die im wesentlichen in der Transportebene liegt,
einer Röntgenstrahleinrichtung (160) mit einem Röntgenstrahler (180) und einem Röntgendetektor (190) zur Durchstrahlung des Rades (40) am Prüfort, die einen Strahlengang definieren, der senkrecht zur Transportebene verläuft, wobei die Röntgenstrahleinrichtung (160) derart angepaßt ist, daß der Strahlengang lateral entlang einer Ebene senkrecht zum Strahlengang verschiebbar ist, und
einer Einrichtung (100a, 100b, 110a, 110b, 120a, 120b) zum Bewegen der Einrichtung (60, 70a, 70b) zum Zufördern und Abfördern des Rades (40) in eine erste Stellung und eine zweite Stellung, wobei die Einrichtung (60, 70a, 70b) zum Zu- und Abfördern des Rades (40) in der ersten Position angeordnet ist, um das Rad (40) zu transportieren, und in der zweiten Stellung angeordnet ist, um den Strahlengang freizugeben und das Schwenken des Rades (40) durch die Schwenkeinrichtung der Handhabungseinrichtung (170) zu ermöglichen.

2. Vorrichtung gemäß Anspruch 1, bei der die Schwenkachse senkrecht zur Transportrichtung (50) ist.

3. Vorrichtung gemäß einem der Ansprüche 1 bis 2, bei der die Einrichtung (60, 70a, 70b) zum Zu- und Abfördern des Rades (40) eine Endlosfördereinrichtung (70a) zum Befördern des Rades (40) in der Transportrichtung (50) aufweist, die an einem freien Ende eines schwenkbaren Armes (100a) befestigt ist, der in zwei Stellungen schwenkbar ist, wobei in der ersten Stellung eine Beförderung des Rades (40) durch die Endlosfördereinrichtung (70a) und in der zweiten Stellung das Schwenken des Rades (40) durch die Schwenkeinrichtung der Handhabungseinrichtung (170) ermöglicht wird.

4. Vorrichtung gemäß Anspruch 3, bei der die Einrichtung (60, 70a, 70b) zum Zu- und Abfördern des Rades (40) eine weitere Endlosfördereinrichtung (70b) aufweist, die an einem freien Ende einer weiteren schwenkbaren Armes (110b) befestigt ist, wobei die schwenkbaren Arme (110a, 110b) um Kippachsen (130a, 130b) drehbar gelagert sind, die parallel zur Transportrichtung (50) und voneinander beabstandet sind.

5. Vorrichtung gemäß einem der Ansprüche 1 bis 3, bei der die Einrichtung (170) zum Handhaben folgende Merkmale aufweist:
zwei Greifer (240a, 240b), die um die Schwenkachse schwenkbar gelagert sind, sich in einer Richtung der Schwenkachse gegenüberliegen und jeweils zwei Kegelräder (250a, 260a, 250b, 260b) aufweisen, die vorgesehen sind, um mit einem Felgenhorn (300) des Rades (40) Eingriff zu nehmen.

6. Vorrichtung gemäß Anspruch 5, bei der die Einrichtung (170) zum Handhaben ferner folgendes Merkmal aufweist:
einen ersten Antrieb zum Schwenken eines der zwei Greifer (240a, 240b) um die Schwenkachse (290).

7. Vorrichtung gemäß Anspruch 5 oder 6, bei der Einrichtung zum Handhaben ferner folgendes Merkmal aufweist:
einen zweiten Antrieb zum Antreiben der Kegelräder (250a, 260a, 250b, 260b) eines der beiden Greifer (240a, 240b).

8. Vorrichtung gemäß einem der Ansprüche 5 bis 7, bei der die Greifer (240a, 240b) in einer Richtung der Schwenkachse (290) in eine erste und eine zweite Stellung verschiebbar sind, um in der ersten Stellung die Zu- und Abförderung des Rades (40) durch die Einrichtung (60, 70a, 70b) zum Zu- und Abfördern des Rades (40) zu ermöglichen, und um in der zweiten Stellung die Kegelräder (250a, 260a, 250b, 260b) der Greifer (240a, 240b) mit dem Felgenhorn (300) des Rades (40) in Eingriff zu bringen.

9. Verfahren zur Steuerung einer Vorrichtung zur Röntgenprüfung eines Rades (40), die eine Röntgenstrahleinrichtung (160) mit einem Röntgenstrahler (180) und einem Röntgendetektor (190) zur Durchstrahlung des Rades (40) an einem sich in einer Transportebene befindlichen Prüfort, umfasst und einen Strahlengang definiert, der senkrecht zur Transportebene verläuft, mit folgenden Schritten:
Zufördern des Rades (40) in einer Transportrichtung (50) in der Transportebene (80) zu dem Prüfort und Abfördern des Rades (40) von dem Prüfort in der Transportrichtung (50) in der Transportebene (80) mittels einer Einrichtung (60, 70a, 70b) zum Zu- und Abfördern, derart, dass das Rad beim Zufördern zu dem Prüfort sowie beim Abfördern von dem Prüfort in der Transportebene verbleibt;
Handhaben des Rades (40) am Prüfort, wobei die Handhabung folgende Schritte aufweist:
Greifen des Rades (40) an dem Prüfort;
Drehen des Rades (40) um eine Rotationsachse des Rades (40); und
Schwenken des Rades (40) um eine Schwenkachse, die im wesentlichen in der Transportebene (80) liegt, wobei die Röntgenstrahleinrichtung (160) derart angepaßt ist, daß der Strahlengang lateral entlang einer Ebene senkrecht zum Strahlengang verschiebbar ist; und
Durchstrahlung des Rades (40) mit Röntgenstrahlung und Detektion der Strahlung
Bewegen der Einrichtung (60, 70a, 70b) zum Zufördern und Abfördern des Rades (40) in eine erste Stellung und eine zweite Stellung, wobei die Einrichtung (60, 70a, 70b) zum Zu- und Abfördern des Rades (40) in der ersten Position angeordnet ist, um das Rad (40) zu transportieren, und in der zweiten Stellung angeordnet ist, um den Strahlengang freizugeben und das Schwenken des Rades (40) bei der Handhabung zu ermöglichen.

## Claims

1. Apparatus for X-ray testing of a wheel (40), comprising:
a means (60, 70a, 70b) for conveying the wheel (40) in a transport direction (50) within a transport plane (80) to a test location arranged within the transport plane, and for removing the wheel (40) from the test location in the transport direction (50) within the transport plane (80) such that the wheel will remain within the transport plane both while being conveyed to the test location and while being removed from the test location;
a means (170) for handling the wheel (40) at the test location, the means for handling comprising:
a means (240a, 240b, 250a, 260a, 250b, 260b) for gripping the wheel (40) at the test location;
a means (250a, 260a, 250b, 260b) for rotating the wheel (40) about an axis of rotation of the wheel (40); and
a means for pivoting the wheel (40) about a pivot axis located essentially within the transport plane,
an X-ray means (160) comprising an X-ray emitter (180) and an X-ray detector (190) for X-raying the wheel (40) at the test location, which define a ray path extending perpendicularly to the transport plane, the X-ray means (160) being adapted such that the ray path is laterally displaceable along a plane, perpendicular to the ray path, and
a means (100a, 100b, 110a, 110b, 120a, 120b) for moving the means (60, 70a, 70b) for conveying the wheel (40) to and removing it from a first position and a second position, the means (60, 70a, 70b) for conveying the wheel (40) and for removing the wheel (40) being arranged in the first position to transport the wheel (40), and being arranged in the second position to release the ray path and to facilitate pivoting of the wheel (40) by the pivoting means of the handling means (170).

2. Apparatus as claimed in claim 1, wherein the pivot axis is perpendicular to the transport direction (50).

3. Apparatus as claimed in any of claims 1 to 2, wherein the means (60, 70a, 70b) for conveying and removing the wheel (40) comprises a continuous conveying means (70a) for conveying the wheel (40) in the transport direction (50) which is attached to a free end of a pivotable arm (100a) which may be pivoted into two positions, the first position facilitating conveying of the wheel (40) by the continuous conveying means (70a), and the second position facilitating pivoting of the wheel (40) by the pivoting means of the handling means (170).

4. Apparatus as claimed in claim 3, wherein the means (60, 70a, 70b) for conveying and removing the wheel (40) comprises a further continuous conveying means (70b) which is attached to a free end of a further pivotable arm (110b), the pivotable arms (110a, 110b) being mounted so as to be rotatable about tilting axes (130a, 130b) which are parallel to the transport direction (50) and spaced apart from each other.

5. Apparatus as claimed in any of claims 1 to 3, wherein the means (170) for handling comprises:
two grippers (240a, 240b) which are mounted so as to be pivotable about the pivot axis, are opposite each other in a direction of the pivot axis and each comprise two bevel gears (250a, 260a, 250b, 260b) provided to engage with a rim flange (300) of the wheel (40).

6. Apparatus as claimed in claim 5, wherein the means (170) for handling further comprises:
a first drive for pivoting one of the two grippers (240a, 240b) about the pivot axis (290).

7. Apparatus as claimed in claim 5 or 6, wherein the means for handling further comprises:
a second drive for driving the bevel gears (250a, 260a, 250b, 260b) of one of the two grippers (240a, 240b).

8. Apparatus as claimed in any of claims 5 to 7, wherein the grippers (240a, 240b) are displaceable to a first and a second position in a direction of the pivot axis (290) so as to facilitate, in the first position, conveying and removing of the wheel (40) by the means (60, 70a, 70b) for conveying and removing the wheel (40), and to engage, in the second position, the bevel gears (250a, 260a, 250b, 260b) of the grippers (240a, 240b) with the rim flange (300) of the wheel (40).

9. Method of controlling an apparatus for X-ray testing of a wheel (40), which apparatus includes an X-ray means (160) comprising an X-ray emitter (180) and an X-ray detector (190) for X-raying the wheel (40) at a test location arranged within a transport plane, and defines a ray path extending perpendicularly to the transport plane, the method comprising:
conveying the wheel (40) in a transport direction (50) within the transport plane (80) to the test location, and removing the wheel (40) from the test location in the transport direction (50) within the transport plane (80) by a means (60, 70a, 70b) for conveying and removing, such that the wheel will remain within the transport plane both while being conveyed to the test location and while being removed from the test location;
handling the wheel (40) at the test location, said handling comprising:
gripping the wheel (40) at the test location;
rotating the wheel (40) about an axis of rotation of the wheel (40); and
pivoting the wheel (40) about a pivot axis located essentially within the transport plane, the X-ray means (160) being adapted such that the ray path is laterally displaceable along a plane, perpendicular to the ray path; and
X-raying the wheel (40) with X-radiation, und detecting the radiation
moving the means (60, 70a, 70b) for conveying the wheel (40) to and removing it from a first position and a second position, the means (60, 70a, 70b) for conveying the wheel (40) and for removing the wheel (40) being arranged in the first position to transport the wheel (40), and being arranged in the second position to release the ray path and to facilitate pivoting of the wheel (40) during the handling.

## Revendications

1. Dispositif de contrôle radiographique d'une roue (40), avec
un moyen (60, 70a, 70b) destiné à amener la roue (40) dans une direction de transport (50) dans un plan de transport (80) vers un lieu de contrôle situé dans le plan de transport et à évacuer la roue (40) du lieu de contrôle dans la direction de transport (50) dans le plan de transport (80), de sorte que la roue reste, lors de l'amenée vers le lieu de contrôle ainsi que lors de l'évacuation du lieu de contrôle, dans le plan de transport;
un moyen (170) destiné à manipuler la roue (40) au lieu de contrôle, le moyen destiné à manipuler présentant les caractéristiques suivantes:
un moyen (240a, 240b, 250a, 260a, 250b, 260b) destiné à saisir la roue (40) au lieu de contrôle;
un moyen (250a, 260a, 250b, 260b) destiné à faire tourner la roue (40) autour d'un axe de rotation de la roue (40); et
un moyen destiné à faire pivoter la roue (40) autour d'un axe de pivotement qui se situe substantiellement dans le plan de transport,
un moyen de rayonnement X (160) avec un ensemble radiogène (180) et un détecteur de rayons X (190) destiné à irradier la roue (40) au lieu de contrôle, qui définissent un trajet de rayons qui s'étend perpendiculairement au plan de transport, le moyen de rayonnement X (160) étant adapté de sorte que le trajet de rayons soit déplaçable latéralement le long d'un plan perpendiculaire au trajet de rayons, et
un moyen (100a, 100b, 110a, 110b, 120a, 120b) destiné à déplacer le moyen (60, 70a, 70b) destiné à amener et évacuer la roue (40) en une première position et une deuxième position, le moyen (60, 70a, 70b) destiné à amener et évacuer la roue (40) étant disposé dans la première position pour transporter la roue (40), et étant disposé dans la deuxième position pour libérer le trajet de rayons et pour permettre le pivotement de la roue (40) par le moyen de pivotement du moyen de manipulation (170).

2. Dispositif selon la revendication 1, dans lequel l'axe de pivotement est perpendiculaire à la direction de transport (50).

3. Dispositif selon l'une des revendications 1 à 2, dans lequel le moyen (60, 70a, 70b) destiné à amener et évacuer la roue (40) présente un moyen de transport sans fin (70a) destiné à transporter la roue (40) dans la direction de transport (50) qui est fixé à une extrémité libre d'un bras pivotable (100a) qui est pivotable en deux positions, dans la première position étant rendu possible un transport de la roue (40) par le moyen de transport sans fin (70a) et dans la deuxième position étant rendu possible le pivotement de la roue (40) par le moyen de pivotement du moyen de manipulation (170).

4. Dispositif selon la revendication 3, dans lequel le moyen (60, 70a, 70b) destiné à amener et évacuer la roue (40) présente un autre moyen de transport sans fin (70b) qui est fixé à une extrémité libre d'un autre bras pivotable (110b), les bras pivotants (110a, 110b) étant montés rotatifs autour d'axes de basculement (130a, 130b) qui sont parallèles à la direction de transport (50) et distants l'un de l'autre.

5. Dispositif selon l'une des revendications 1 à 3, dans lequel le moyen (170) destiné à manipuler présente les caractéristiques suivantes:
deux préhenseurs (240a, 240b) qui sont montés pivotants autour de l'axe de pivotement, qui sont opposés l'un à l'autre dans une direction de l'axe de pivotement et qui présentent, chacun, deux roues coniques (250a, 260a, 250b, 260b) qui sont prévues pour venir en prise avec un rebord de jante (300) de la roue (40).

6. Dispositif selon la revendication 5, dans lequel le moyen (170) destiné à manipuler présente par ailleurs la caractéristique suivante:
un premier entraînement destiné à faire pivoter l'un des deux préhenseurs (240a, 240b) autour de l'axe de pivotement (290).

7. Dispositif selon la revendication 5 ou 6, dans lequel le moyen destiné à manipuler présente par ailleurs la caractéristique suivante:
un deuxième entraînement destiné à entraîner les roues coniques (250a, 260a, 250b, 260b) de l'un des deux préhenseurs (240a, 240b).

8. Dispositif selon l'une des revendications 5 à 7, dans lequel les préhenseurs (240a, 240b) sont déplaçables dans une direction de l'axe de pivotement (290) en une première et une deuxième position, pour permettre, dans la première position, l'amenée et l'évacuation de la roue (40) par le moyen (60, 70a, 70b) pour l'amenée et l'évacuation de la roue (40), et pour amener en prise, dans la deuxième position, les roues coniques (250a, 260a, 250b, 260b) des préhenseurs (240a, 240b) avec le rebord de jante (300) de la roue (40).

9. Procédé pour commander un dispositif de contrôle radiographique d'une roue (40) comportant un moyen de rayonnement X (160) avec un ensemble radiogène (180) et un détecteur de rayons X (190) destiné à irradier la roue (40) à un lieu de contrôle situé dans un plan de transport et définissant un trajet de rayons qui s'étend perpendiculairement au plan de transport, aux étapes suivantes:
amener la roue (40) dans une direction de transport (50) dans le plan de transport (80) vers le lieu de contrôle et évacuer la roue (40) du lieu de contrôle dans la direction de transport (50) dans le plan de transport (80) à l'aide d'un moyen (60, 70a, 70b) destiné à amener et évacuer de sorte que la roue reste, lors de l'amenée vers le lieu de contrôle ainsi que de l'évacuation du lieu de transport, dans le plan de transport;
manipuler la roue (40) au lieu de contrôle, la manipulation présentant les étapes suivantes:
saisir la roue (40) au lieu de contrôle;
faire tourner la roue (40) autour d'un axe de rotation de la roue (40); et
faire pivoter la roue (40) autour d'un axe de pivotement qui se situe substantiellement dans le plan de transport (80), le moyen de rayonnement X (160) étant adapté de sorte que le trajet de rayons soit déplaçable latéralement le long d'un plan perpendiculaire au trajet de rayons; et
irradier la roue (40) par rayonnement X et détecter le rayonnement;
déplacer le moyen (60, 70a, 70b) destiné à amener et évacuer la roue (40) en une première position et une deuxième position, le moyen (60, 70a, 70b) destiné à amener et évacuer la roue (40) étant disposé dans la première position pour transporter la roue (40), et étant disposé dans la deuxième position pour libérer le trajet de rayons et pour permettre le pivotement de la roue (40) lors de la manipulation.
